# EUROPEAN PATENT SPECIFICATION

(11) **EP 4 404 336 B1**
(45) Date of publication and mention of the grant of the patent: **04.03.2026**
(21) Application number: 23848459.6
(22) Date of filing: 10.07.2023
(51) Int. Cl.: H01M 10/617, H01M 10/613, H01M 10/615

(54) **IMMERSION-TYPE POWER BATTERY THERMAL MANAGEMENT SYSTEM**
WÄRMEVERWALTUNGSSYSTEM FÜR TAUCHLEISTUNGSBATTERIE
SYSTÈME DE GESTION THERMIQUE DE BATTERIE D'ALIMENTATION DE TYPE À IMMERSION

(30) Priority: 09.12.2022 CN 202211575986
(43) Date of publication of application: 24.07.2024
(73) Proprietor: Jiangsu Advanced Construction Machinery Innovation Center Ltd., Xuzhou, Jiangsu 221004 (CN)
(72) Inventor: XIAO, Penghui, Jiangsu 221004 (CN); ZHUANG, Zhiheng, Jiangsu 221004 (CN); WANG, Shuai, Jiangsu 221004 (CN)
(74) Representative: Proi World Intellectual Property GmbH
(86) International application number: PCT/CN2023/106476
(87) International publication number: WO 2024/119822

(56) References cited:
- CN-A- 115 863 844
- CN-U- 214 043 778
- CN-U- 216 054 908
- CN-U- 217 214 871
- FR-A1- 3 125 635
- JP-A- H09 167 631
- JP-A- H09 167 631
- US-A1- 2010 104 927

## Description

### BACKGROUND OF THE INVENTION

### 1. Technical Field

The invention relates to the technical field of thermal management of power batteries, in particular to an immersion-type thermal management system for power batteries.

### 2. Description of Related Art

In recent years, with the wide use of power batteries, application scenarios of the power batteries become increasingly diversified and complex, accompanied with the gradual emergence of application problems, among which the unsatisfying consistency in electrical performance, short cycle life and short battery life caused by poor temperature uniformity of the power batteries are prominent. In addition, the frequent occurrence of explosions and fires of the power batteries leads to extensive attention to the thermal safety of the power batteries. A thermal management system for battery is known from JP H09167631 A.

Thermal management systems for batteries in the prior art have at least the following defects:
1. The replacement of hot liquid in a closed cavity leads to low heat-exchange efficiency. In the prior art, a sealed battery box is used to allow a heat-exchange liquid medium to flow therein, and heat/cold of a battery is indirectly transferred to the outside by means of a heat-exchange device, thus greatly compromising the heat-exchange efficiency; in addition, the liquid in the sealed battery box has a poor flow characteristic, which makes it impossible to drive a flow field to dissipate heat uniformly, so the thermal management effect cannot be guaranteed.
2. Heating is not taken into account and there is no gas discharge measure. In the structure of some thermal management systems, heating in extremely cold weather and corresponding thermal uniformity of power batteries are not taken into account, and the configuration of a liquid outlet in the bottom of the battery box makes it impossible to timely and effectively discharge gas generated by the power batteries in use, thus greatly compromising the safety of the power batteries in use.
3. The complex and diversified components and high cost are not beneficial to industrialization. In the prior art, a passage is additionally arranged, which greatly increases the number of assembled components and the process difficulty of power batteries; in addition, the service environment of the power batteries is severe, so the reliability of the power batteries cannot be guaranteed; and the addition of a groove greatly increases the cost of the power batteries and is not beneficial to industrial popularization.

### BRIEF SUMMARY OF THE INVENTION

In view of the defects in the prior art, the invention provides an immersion-type thermal management system for power batteries, which effectively solves the problem of poor thermal uniformity and safety of the power batteries in use, facilitates efficient and convenient thermal management of the power batteries, and prevents thermal runaway accidents of the power batteries.

An immersion-type thermal management system for power batteries comprises a power battery unit and a thermal management unit, wherein the power battery unit comprises a box, a battery module and a liquid cooling plate, the box is provided with an external liquid inlet and an external liquid outlet, the liquid cooling plate is provided with internal liquid outlets and located below the battery module, a liquid passage is arranged in the liquid cooling plate, an immersion space is formed in the box, the internal liquid outlets are located between and connected to the liquid passage and the immersion space, the external liquid inlet is connected to the liquid passage, and the external liquid outlet is connected to the immersion space; the thermal management unit comprises a controller and an external circulation path formed outside the box, the external circulation path is connected to the external liquid inlet from the external liquid outlet and comprises an expansion box, a circulating pump, a water cooling unit, a heater and a check valve which are sequentially connected from the external liquid outlet, and the expansion box, the circulating pump, the water cooling unit and the heater are all connected to the controller; liquid enters the liquid passage from the external circulation path via the external liquid inlet, then enters the immersion space via the internal liquid outlets, and then enters the external circulation path via the external liquid outlet; the system at least has a cooling mode and a heating mode, and the controller controls the system to switch between the cooling mode and the heating mode.

Optionally, the liquid passage comprises a plurality of S-shaped passages which are arranged in parallel, and a plurality of flow divider partitions are arranged at the external liquid inlet to allow liquid flowing in via the external liquid inlet to enter the S-shaped passages uniformly.

Optionally, the external liquid outlet is formed in an upper portion of the box and located above the battery module.

Optionally, a filter is arranged between the expansion box and the circulating pump.

Optionally, a first temperature sensor is arranged at the external liquid inlet, connected to the controller and used for monitoring a temperature of the liquid flowing in via the external liquid inlet.

Optionally, a second temperature sensor is arranged at the external liquid outlet, connected to the controller and used for monitoring a temperature of the liquid flowing in via the external liquid outlet.

Optionally, the system further has a self-circulation mode and a static mode, and the controller controls the system to switch between the cooling mode, the heating mode, the self-circulation mode and the static mode.

Optionally, thermally conductive silicone is arranged between the battery module and the liquid cooling plate.

Optionally, the box is provided with N external liquid inlets, N is a positive integer, an interior of the liquid cooling plate is divided into N liquid inlet spaces, the external liquid inlets are connected to the liquid inlet spaces in one-to-one correspondence, and the liquid passage is arranged in each liquid inlet space.

Optionally, the internal liquid outlets are formed in two ends of the liquid cooling plate.

Compared with the prior art, the technical solution of the invention has at least the following beneficial effects: the immersion-type thermal management system for power batteries provided by the invention has a heating mode and a cooling mode and can be easily controlled as required, and liquid can sufficiently exchange heat with the battery module, so the efficiency is high, the effect is good, the problem of poor thermal uniformity and safety in use of power batteries is effectively solved, efficient and convenient thermal management of the power batteries is facilitated, and thermal runaway accidents of the power batteries are prevented.

### BRIEF DESCRIPTION OF THE SEVERAL VIEWS OF THE DRAWINGS

FIG. 1 is a schematic diagram of an immersion-type thermal management system for power batteries according to the invention (wherein, the arrows indicate the flow direction of liquid, and the dotted lines indicate signal connection);
FIG. 2 is a schematic diagram of a power battery unit of the immersion-type thermal management system for power batteries according to the invention;
FIG. 3 is a sectional view along A-A in FIG. 2.

In the FIGS.: 1, box; 2, battery module; 3, liquid cooling plate; 4, external liquid inlet; 5, external liquid outlet; 6, liquid passage; 7, immersion space; 8, internal liquid outlet; 9, expansion box; 10, circulating pump; 11, water cooling unit; 12, heater; 13, check valve; 14, flow divider partition; 15, filter; 16, first temperature sensor; 17, second temperature sensor; 18, controller.

### DETAILED DESCRIPTION OF THE INVENTION

Illustrative embodiments of the invention will be described below in conjunction with accompanying drawings together with some details of the embodiments of the invention to facilitate understanding, and all these embodiments and details should be construed as illustrative merely. Therefore, those ordinarily skilled in the art should appreciate that various transformations and amendments can be made to the embodiments described here without departing from the scope and spirit of the invention. Similarly, for the sake of clarity and briefness, the description of commonly known functions and structures is omitted below.

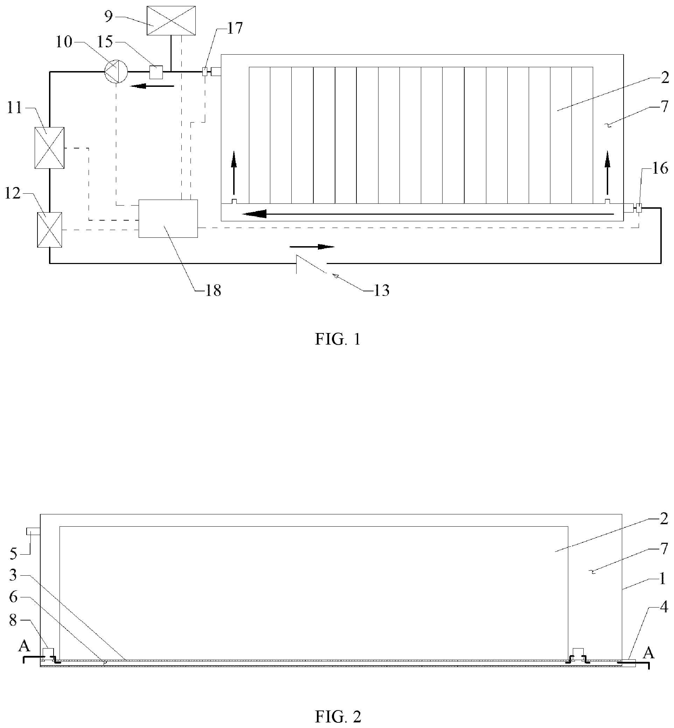

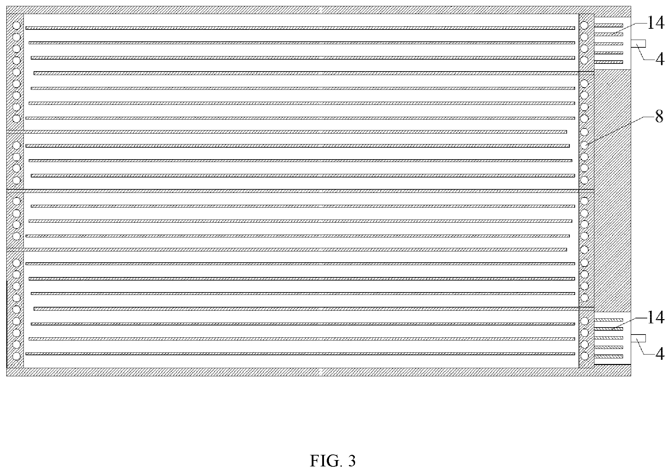

As shown in FIG. 1-FIG. 3, an embodiment of the invention provides an immersion-type thermal management system for power batteries, comprising a power battery unit and a thermal management unit; wherein, the power battery unit comprises a box 1, a battery module 2 and a liquid cooling plate 3, the box 1 is provided with an external liquid inlet 4 and an external liquid outlet 5, the liquid cooling plate 3 is provided with internal liquid outlets 8 and located below the battery module 2, a liquid passage 6 is arranged in the liquid cooling plate 3, an immersion space 7 is formed in the box 1, the internal liquid outlets 8 are located between and connected to the liquid passage 6 and the immersion space 7, the external liquid inlet 4 is connected to the liquid passage 6, and the external liquid outlet 5 is connected to the immersion space 7; the thermal management unit comprises a controller 18 and an external circulation path formed outside the box 1, the external circulation path is connected to the external liquid inlet 4 from the external liquid outlet 5 and comprises an expansion box 9, a circulating pump 10, a water cooling unit 11, a heater 12 and a check valve 13 which are sequentially connected from the external liquid outlet 5, and the expansion box 9, the circulating pump 10, the water cooling unit 11 and the heater 12 are all connected to the controller 18; the expansion box 9 is used for filtering out gas generated in the operating process of the thermal management system, the circulating pump 10 is used for providing operating power for the whole thermal management system, the water cooling unit 11 is used for providing a cold source required by the thermal management system, the heater 12 is used for providing a heat source required by the thermal management system, and the check valve 13 is used for preventing liquid in a pipeline from flowing back; liquid enters the liquid passage 6 from the external circulation path via the external liquid inlet 4, then enters the immersion space 7 via the internal liquid outlets 8, and when the liquid level in the immersion space 7 reaches the position where the external liquid outlet 5 is located, is discharged via the external liquid outlet 5 and enters the external circulation path; and the controller 18 is used for controlling the system to switch between different modes.

Wherein, more specifically, the liquid passage 6 comprises a plurality of S-shaped passages which are arranged in parallel, a plurality of flow divider partitions 14 are arranged at the external liquid inlet 4 to allow liquid flowing in via the external liquid inlet 4 to uniformly enter the S-shaped passages, the external liquid outlet 5 is formed in an upper portion of the box 1 and located above the battery module 2, and a filter 15 is arranged between the expansion box 9 and the circulating pump 10 and is used for filtering out impurities in the liquid; and a first temperature sensor 16 is arranged at the external liquid inlet 4, connected to the controller 18 and used for monitoring the temperature of the liquid flowing in via the external liquid inlet 4, and a second temperature sensor 17 is arranged at the external liquid outlet 5, connected to the controller 18 and used for monitoring the temperature of the liquid flowing out via the external liquid outlet 5.

In this embodiment, the S-shaped passages are in the form of four parallel passages, and liquid flowing in via the external liquid inlet 4 synchronously enters the liquid cooling plate 3 from the four passages, and after interior of the liquid cooling plate 3 is full of liquid, the liquid overflows into the immersion space 7 via the internal liquid outlets 8.

Thermally conductive silicone is arranged between the battery module 2 and the liquid cooling plate 3 to enhance heat transfer between the battery module 2 and the liquid cooling plate 3, the internal liquid outlets 8 are formed in two ends of the liquid cooling plate 3 and are not blocked by the thermally conductive silicone.

The thermal management system has a self-circulation mode and a static mode, and the controller 18 controls the thermal management system to switch between a cooling mode, a heating mode, the self-circulation mode and the static mode specifically as follows:

Before running of the whole thermal management system, the circulation circuit including the box 1 of the power battery unit is filled with heat-transfer liquid.

When the immersion-type thermal management system runs in the cooling mode, the controller 18 sends a running instruction to the circulating pump 10 and the water cooling unit 11 to enable the circulating pump 10 and the water cooling unit 11 to work. At this moment, heat generated by the battery module 2 will be gradually transferred to the liquid in the power battery unit, and the liquid is driven by the circulating pump 10 to enter the external circulation path via the external liquid outlet 5; because gas will be generated in use of the battery module 2 and will overflow into a cavity in the power battery unit, the heat transfer efficiency of the system and the safety of a power battery in use will be severely affected if the gas cannot be discharged in time; in view of this, the liquid entering the external circulation path first passes through the expansion box 9 to discharge the gas generated, then flows through the filter 15 to filter out impurities in the power battery unit, then flows into the circulating pump 10 to improve the driving force, and then enters the water cooling unit 11 to transfer heat absorbed from the battery module 2 to the water cooling unit 11 to reduce the temperature of the liquid; in this mode, the heater 12 does not work, so the liquid remains unchanged after flowing through the heater 12, and directly flows into the check valve 13 which is used for preventing the liquid from flowing back; finally, the liquid flows into the liquid passage 6 of the liquid cooling plate 3 via the external liquid inlet 4 and overflows via the internal liquid outlets 8. In this way, original liquid in the power battery unit is gradually replaced, and heat, gas and impurities generated in use of the battery module 2 are taken away, thus forming a complete power battery cooling circuit. The controller 18 monitors the temperature of the liquid flowing into the power battery unit and the liquid flowing out of the power battery unit through the first temperature sensor 16 and the second temperature sensor 17 respectively to regulate the operating power of the circulating pump 10 and the water cooling unit 11.

Compared with the cooling mode, when the immersion-type thermal management system runs in the heating mode, the controller 18 sends a running instruction to the circulating pump 10 and the heater 12 to enable the circulating pump 10 and the heater 12 to work. The immersion-type thermal management system runs in the same way as in the cooling mode in other aspects.

Compared with the cooling mode, when the immersion-type thermal management system runs in the self-circulation mode, the controller 18 sends a running instruction to the circulating pump 10 to enable the circulating pump to work, and the internal temperature of the power battery unit is uniformized by flowing of liquid. In this mode, neither the water cooling unit nor the heater works.

In the static mode, the thermal management system is in a static state and does not work.

In the design of this embodiment, liquid overflows from the tops of the S-shaped passages of the liquid cooling plate 3, the battery module 2 is directly immersed in the overflowing liquid, and the liquid in the S-shaped passages of the liquid cooling plate 3 can indirectly exchange heat with the bottom of the battery module 2, thus solving the problem that the heat-exchange uniformity is poor because the bottom of the battery module 2 cannot be immersed and guaranteeing good heat-exchange uniformity of the battery module 2.

In this design, the liquid outlet of the power battery unit is formed in the upper portion of the box 1. Considering that flammable and combustible gas that needs to be discharged in time will be generated in use of the power battery and the generated gas will be undoubtedly accumulated in the upper portion of the box 1 when the cavity of the power battery unit is full of liquid, the liquid outlet is formed in the upper portion of the box 1 to easily discharge the generated gas along with the liquid in the box, thus greatly reducing the risk of thermal safety accidents of the power battery unit.

In the invention, the expansion box 9 is arranged in the system circuit and is connected to a position close to the external liquid outlet 5 of the power battery unit, such that gas taken out of the power battery unit by liquid can be quickly and effectively absorbed into the expansion box 9 to be discharged into the atmosphere, thus reducing harm of the gas to the system.

The S-shaped passages used in this design is a four-channel parallel passages, and liquid flows in from two ends of the S-shaped passages, thus guaranteeing the temperature uniformity of liquid in the liquid cooling plate 3; and the internal liquid outlets 8 are arranged above the S-shaped passages at the two ends of the liquid cooling plate 3, thus guaranteeing the temperature uniformity of liquid entering the cavity of the power battery unit.

In the invention, the water-cooling unit 11 and the heater 12 are arranged in the system circuit, such that the system can both cool and heat a power battery, thus improving the working adaptivity of the power battery in high-temperature and low-temperature harsh conditions.

In addition, a liquid level sensor is arranged in the expansion box 9 and connected to the controller 18 through a signal acquisition line. The flow rate of liquid in the system can be properly controlled by changing the liquid level, and a liquid supply signal can be provided, thus facilitating efficient and safe use of the thermal management system.

In this embodiment, the number of the external liquid inlets 4 is two, the interior of the liquid cooling plate 3 is divided into two liquid inlet spaces, and the external liquid inlets 4 are connected to the liquid passages 6 in the liquid inlet spaces in one-to-one correspondence to allow liquid to enter the interior of the liquid cooling plate 3 from the external circulation path.

In some other embodiments, the number of the external liquid inlets 4 can be designed according to the size of the liquid cooling plate 3, the amount of liquid entering, a desired heating/cooling effect, etc., for example, the number of the external liquid inlets 4 may be 1, 3, 4 or 5, etc. Correspondingly, the interior of the liquid cooling plate 3 is divided into the same number of liquid inlet spaces, the external liquid inlets 4 are connected to the liquid inlet spaces in one-to-one correspondence, and a liquid passage 6 is arranged in each liquid inlet space.

Compared with the prior art, the immersion-type thermal management system for power batteries provided by the invention has a heating mode and a cooling mode and can be easily controlled as required, and liquid can sufficiently exchange heat with the battery module, so the efficiency is high, the effect is good, the problem of poor thermal uniformity and safety in use of power batteries is effectively solved, efficient and convenient thermal management of the power batteries is facilitated, and thermal runaway accidents of the power batteries are prevented.

## Claims

1. An immersion-type thermal management system for power batteries, comprising a power battery unit and a thermal management unit,
**characterized in that**:
the power battery unit comprises a box (1), a battery module (2) and a liquid cooling plate (3), the box (1) is provided with an external liquid inlet (4) and an external liquid outlet (5), the liquid cooling plate (3) is provided with internal liquid outlets (8) and located below the battery module (2), a liquid passage (6) is arranged in the liquid cooling plate (3), an immersion space (7) is formed in the box (1), the internal liquid outlets (8) are located between and connected to the liquid passage (6) and the immersion space (7), the external liquid inlet (4) is connected to the liquid passage (6), and the external liquid outlet (5) is connected to the immersion space (7);
the thermal management unit comprises a controller (18) and an external circulation path formed outside the box (1), the external circulation path is connected to the external liquid inlet (4) from the external liquid outlet (5) and comprises an expansion box (9), a circulating pump (10), a water cooling unit (11), a heater (12) and a check valve (13) which are sequentially connected from the external liquid outlet (5), and the expansion box (9), the circulating pump (10), the water cooling unit (11) and the heater (12) are all connected to the controller (18);
liquid enters the liquid passage (6) from the external circulation path via the external liquid inlet (4), then enters the immersion space (7) via the internal liquid outlets (8), and then enters the external circulation path via the external liquid outlet (5);
the system at least has a cooling mode and a heating mode, and the controller (18) controls the system to switch between the cooling mode and the heating mode.

2. The immersion-type thermal management system for power batteries according to Claim 1, wherein the liquid passage (6) comprises a plurality of S-shaped passages which are arranged in parallel, and a plurality of flow divider partitions (14) are arranged at the external liquid inlet (4) to allow liquid flowing in via the external liquid inlet (4) to enter the S-shaped passages uniformly.

3. The immersion-type thermal management system for power batteries according to Claim 1, wherein the external liquid outlet (5) is formed in an upper portion of the box (1) and located above the battery module (2).

4. The immersion-type thermal management system for power batteries according to Claim 1, wherein a filter (15) is arranged between the expansion box (9) and the circulating pump (10).

5. The immersion-type thermal management system for power batteries according to Claim 1, wherein a first temperature sensor (16) is arranged at the external liquid inlet (4), connected to the controller (18) and used for monitoring a temperature of the liquid flowing in via the external liquid inlet (4).

6. The immersion-type thermal management system for power batteries according to Claim 1, wherein a second temperature sensor (17) is arranged at the external liquid outlet (5), connected to the controller (18) and used for monitoring a temperature of the liquid flowing out via the external liquid outlet (5).

7. The immersion-type thermal management system for power batteries according to Claim 1, wherein the system further has a self-circulation mode and a static mode, and the controller (18) controls the system to switch between the cooling mode, the heating mode, the self-circulation mode and the static mode.

8. The immersion-type thermal management system for power batteries according to Claim 1, wherein thermally conductive silicone is arranged between the battery module (2) and the liquid cooling plate (3).

9. The immersion-type thermal management system for power batteries according to Claim 1, wherein the box (1) is provided with N said external liquid inlets (4), N is a positive integer, an interior of the liquid cooling plate (3) is divided into N liquid inlet spaces, the external liquid inlets (4) are connected to the liquid inlet spaces in one-to-one correspondence, and the liquid passage (6) is arranged in each said liquid inlet space.

10. The immersion-type thermal management system for power batteries according to Claim 1, wherein the internal liquid outlets (8) are formed in two ends of the liquid cooling plate (3).

## Patentansprüche

1. Ein Tauch-Wärmemanagementsystem für Leistungsbatterien, bestehend aus einer Leistungsbatterieeinheit und einer Wärmemanagementeinheit,
**dadurch gekennzeichnet, dass**:
wobei:
die Leistungsbatterieeinheit einen Kasten (1), ein Batteriemodul (2) und eine Flüssigkeitskühlplatte (3) umfasst, der Kasten (1) mit einem externen Flüssigkeitseinlass (4) und einem externen Flüssigkeitsauslass (5) versehen ist, die Flüssigkeitskühlplatte (3) mit internen Flüssigkeitsauslässen (8) versehen ist und sich unterhalb des Batteriemoduls (2) befindet, ein Flüssigkeitskanal (6) in der Flüssigkeitskühlplatte (3) angeordnet ist, ein Tauchraum (7) in dem Gehäuse (1) ausgebildet ist, die internen Flüssigkeitsauslässe (8) zwischen dem Flüssigkeitskanal (6) und dem Tauchraum (7) angeordnet und mit diesen verbunden sind, der externe Flüssigkeitseinlass (4) mit dem Flüssigkeitskanal (6) verbunden ist und der externe Flüssigkeitsauslass (5) mit dem Tauchraum (7) verbunden ist;
die Wärmemanagementeinheit umfasst eine Steuereinheit (18) und einen außerhalb des Kastens (1) ausgebildeten externen Zirkulationsweg, der externe Zirkulationsweg ist mit dem externen Flüssigkeitseinlass (4) vom externen Flüssigkeitsauslass (5) verbunden und umfasst einen Expansionskasten (9), eine Umwälzpumpe (10), eine Wasserkühlungseinheit (11), eine Heizung (12) und ein Rückschlagventil (13), die nacheinander vom externen Flüssigkeitsauslass (5) aus verbunden sind, und der Expansionskasten (9), die Umwälzpumpe (10), die Wasserkühleinheit (11) und die Heizung (12) sind alle mit der Steuereinheit (18) verbunden;
Flüssigkeit gelangt aus dem externen Zirkulationsweg über den externen Flüssigkeitseinlass (4) in den Flüssigkeitskanal (6), dann über die internen Flüssigkeitsauslässe (8) in den Tauchraum (7) und anschließend über den externen Flüssigkeitsauslass (5) in den externen Zirkulationsweg;
Das System verfügt mindestens über einen Kühlmodus und einen Heizmodus, und die Steuereinheit (18) steuert das System so, dass es zwischen dem Kühlmodus und dem Heizmodus umschaltet.

2. Immersions-Wärmemanagementsystem für Leistungsbatterien gemäß Anspruch 1, wobei der Flüssigkeitskanal (6) mehrere parallel angeordnete S-förmige Kanäle umfasst und mehrere Strömungsteiler-Trennwände (14) am externen Flüssigkeitseinlass (4) angeordnet sind, damit die über den externen Flüssigkeitseinlass (4) einströmende Flüssigkeit gleichmäßig in die S-förmigen Kanäle gelangt.

3. Immersions-Wärmemanagementsystem für Leistungsbatterien gemäß Anspruch 1, wobei der externe Flüssigkeitsauslass (5) in einem oberen Abschnitt des Kastens (1) ausgebildet ist und sich über dem Batteriemodul (2) befindet.

4. Immersions-Wärmemanagementsystem für Leistungsbatterien gemäß Anspruch 1, wobei ein Filter (15) zwischen dem Ausdehnungsgefäß (9) und der Umwälzpumpe (10) angeordnet ist.

5. Immersions-Wärmemanagementsystem für Leistungsbatterien gemäß Anspruch 1, wobei ein erster Temperatursensor (16) am externen Flüssigkeitseinlass (4) angeordnet ist, mit der Steuereinheit (18) verbunden ist und zur Überwachung einer Temperatur der über den externen Flüssigkeitseinlass (4) einströmenden Flüssigkeit dient.

6. Immersions-Wärmemanagementsystem für Leistungsbatterien gemäß Anspruch 1, wobei ein zweiter Temperatursensor (17) am externen Flüssigkeitsauslass (5) angeordnet ist, mit der Steuereinheit (18) verbunden ist und zur Überwachung einer Temperatur der über den externen Flüssigkeitsauslass (5) ausströmenden Flüssigkeit dient.

7. Immersions-Wärmemanagementsystem für Leistungsbatterien gemäß Anspruch 1, wobei das System ferner einen Selbstzirkulationsmodus und einen statischen Modus aufweist und die Steuereinheit (18) das System so steuert, dass es zwischen dem Kühlmodus, dem Heizmodus, dem Selbstzirkulationsmodus und dem statischen Modus umschaltet.

8. Immersions-Wärmemanagementsystem für Leistungsbatterien gemäß Anspruch 1, wobei zwischen dem Batteriemodul (2) und der Flüssigkeitskühlplatte (3) wärmeleitendes Silikon angeordnet ist.

9. Immersions-Wärmemanagementsystem für Leistungsbatterien gemäß Anspruch 1, wobei der Kasten (1) mit N der genannten externen Flüssigkeitseinlässe (4) versehen ist, N eine positive ganze Zahl ist, ein Innenraum der Flüssigkeitskühlplatte (3) in N Flüssigkeitseinlassräume unterteilt ist, die externen Flüssigkeitseinlass en (4) in einer Eins-zu-Eins-Entsprechung mit den Flüssigkeitseinlassräumen verbunden sind und der Flüssigkeitskanal (6) in jedem der Flüssigkeitseinlassräume angeordnet ist.

10. Immersions-Wärmemanagementsystem für Leistungsbatterien gemäß Anspruch 1, wobei die internen Flüssigkeitsauslässe (8) an beiden Enden der Flüssigkeitskühlplatte (3) ausgebildet sind.

## Revendications

1. Système de gestion thermique à immersion pour batteries d'alimentation, comprenant une unité de batterie d'alimentation et une unité de gestion thermique,
**caractérisé en ce que** :
dans lequel :
l'unité de batterie d'alimentation comprend un boîtier (1), un module de batterie (2) et une plaque de refroidissement par liquide (3), le boîtier (1) est muni d'une entrée de liquide externe (4) et d'une sortie de liquide externe (5), la plaque de refroidissement par liquide (3) est munie de sorties de liquide internes (8) et située sous le module de batterie (2), un passage de liquide (6) est disposé dans la plaque de refroidissement par liquide (3), un espace d'immersion (7) est formé dans le boîtier (1), les sorties de liquide internes (8) sont situées entre le passage de liquide (6) et l'espace d'immersion (7) et sont reliées à ceux-ci, l'entrée de liquide externe (4) est reliée au passage de liquide (6) et la sortie de liquide externe (5) est reliée à l'espace d'immersion (7) ;
l'unité de gestion thermique comprend un contrôleur (18) et un circuit de circulation externe formé à l'extérieur du boîtier (1), le circuit de circulation externe est relié à l'entrée de liquide externe (4) depuis la sortie de liquide externe (5) et comprend un boîtier d'expansion (9), une pompe de circulation (10), une unité de refroidissement à eau (11), un dispositif de chauffage (12) et un clapet anti-retour (13) qui sont reliés séquentiellement à partir de la sortie de liquide externe (5), et la boîte d'expansion (9), la pompe de circulation (10), l'unité de refroidissement à eau (11) et le dispositif de chauffage (12) sont tous reliés au contrôleur (18) ;
le liquide pénètre dans le passage de liquide (6) depuis le circuit de circulation externe via l'entrée de liquide externe (4), puis pénètre dans l'espace d'immersion (7) via les sorties de liquide internes (8), puis pénètre dans le circuit de circulation externe via la sortie de liquide externe (5) ;
le système dispose au moins d'un mode de refroidissement et d'un mode de chauffage, et le contrôleur (18) commande le système pour passer du mode de refroidissement au mode de chauffage.

2. Système de gestion thermique de type immersion pour batteries d'alimentation selon la revendication 1, dans lequel le passage de liquide (6) comprend une pluralité de passages en forme de S qui sont disposés en parallèle, et une pluralité de cloisons de division de flux (14) sont disposées au niveau de l'entrée de liquide externe (4) pour permettre au liquide s'écoulant via l'entrée de liquide externe (4) d'entrer uniformément dans les passages en forme de S.

3. Système de gestion thermique à immersion pour batteries d'alimentation selon la revendication 1, dans lequel la sortie de liquide externe (5) est formée dans une partie supérieure du boîtier (1) et située au-dessus du module de batterie (2).

4. Système de gestion thermique à immersion pour batteries d'alimentation selon la revendication 1, dans lequel un filtre (15) est disposé entre le réservoir d'expansion (9) et la pompe de circulation (10).

5. Système de gestion thermique à immersion pour batteries d'alimentation selon la revendication 1, dans lequel un premier capteur de température (16) est disposé au niveau de l'entrée de liquide externe (4), connecté au contrôleur (18) et utilisé pour surveiller la température du liquide s'écoulant via l'entrée de liquide externe (4).

6. Système de gestion thermique de type immersion pour batteries d'alimentation selon la revendication 1, dans lequel un deuxième capteur de température (17) est disposé au niveau de la sortie de liquide externe (5), connecté au contrôleur (18) et utilisé pour surveiller la température du liquide s'écoulant via la sortie de liquide externe (5).

7. Système de gestion thermique de type immersion pour batteries d'alimentation selon la revendication 1, dans lequel le système comporte en outre un mode d'auto-circulation et un mode statique, et le contrôleur (18) commande le système pour passer du mode de refroidissement au mode de chauffage, au mode d'auto-circulation et au mode statique.

8. Système de gestion thermique de type immersion pour batteries d'alimentation selon la revendication 1, dans lequel du silicone thermoconducteur est disposé entre le module de batterie (2) et la plaque de refroidissement par liquide (3).

9. Système de gestion thermique de type immersion pour batteries d'alimentation selon la revendication 1, dans lequel le boîtier (1) est muni de N entrées de liquide externes (4), N étant un nombre entier positif, l'intérieur de la plaque de refroidissement par liquide (3) est divisé en N espaces d'entrée de liquide, les entrées de liquide externe (4) sont reliées aux espaces d'entrée de liquide selon une correspondance biunivoque, et le passage de liquide (6) est disposé dans chaque espace d'entrée de liquide.

10. Système de gestion thermique de type immersion pour batteries d'alimentation selon la revendication 1, dans lequel les sorties de liquide internes (8) sont formées aux deux extrémités de la plaque de refroidissement par liquide (3).
